# FASCICULE DE BREVET EUROPEEN

(11) **EP 2 885 146 B1**
(45) Date de publication et mention de la délivrance du brevet: **17.08.2016**
(21) Numéro de dépôt: 13744663.9
(22) Date de dépôt: 28.06.2013
(51) Int. Cl.: B60K 6/52, B60W 20/00, B60W 10/06, B60W 10/08, B60K 6/442, B60L 11/18, F16H 3/00

(54) **PROCEDE DE LIMITATION DE COUPLE D'UNE MACHINE ELECTRIQUE DE VEHICULE HYBRIDE, DANS LE CAS D'UNE FORTE DEMANDE EN COUPLE**
VERFAHREN ZUR BEGRENZUNG DES DREHMOMENTS EINER ELEKTRISCHEN MASCHINE EINES HYBRIDFAHRZEUGS IM FALLE DES BEDARFS AN EINEM HOHEN DREHMOMENT
METHOD FOR LIMITING THE TORQUE OF AN ELECTRIC MACHINE OF A HYBRID VEHICLE, IN CASE OF A HIGH TORQUE REQUEST

(30) Priorité: 14.08.2012 FR 1257802
(43) Date de publication de la demande: 24.06.2015
(73) Titulaire: Peugeot Citroën Automobiles SA, 78140 Vélizy Villacoublay (FR)
(72) Inventeur: LAUNAY, Cedric, F-78680 Epone (FR); MILHAU, Yohan, F-78400 Chatou (FR); GALINAUD, Florian, F-75013 Paris (FR)
(86) Numéro de dépôt international: PCT/FR2013/051526
(87) Numéro de publication internationale: WO 2014/027152

(56) Documents cités:
- DE-A1-102005 018 437
- US-A1- 2002 013 194
- US-A1- 2010 062 896
- US-B1- 6 196 344

## Description

La présente invention concerne pour un véhicule hybride comportant un moteur thermique de traction, et une machine électrique couplée à ce moteur, un procédé de limitation du couple prélevé par cette machine électrique, ainsi qu'un véhicule hybride mettant en oeuvre un tel procédé.

Un type de véhicule hybride connu comporte un moteur thermique de traction qui peut être du type essence ou Diesel, entraînant les roues du train avant, couplé de manière permanente à une machine électrique avant qui peut fonctionner en moteur, notamment pour démarrer ce moteur thermique, et en génératrice pour recharger une batterie du réseau de bord ainsi qu'un dispositif de stockage de l'énergie électrique.

Le dispositif de stockage de l'énergie alimente une deuxième machine électrique arrière entraînant les roues du train arrière, qui peut aussi fonctionner en moteur pour délivrer un couple sur ces roues, ou en génératrice afin de récupérer l'énergie cinétique du véhicule, et de recharger ce dispositif de stockage.

D'une manière générale, le dispositif de stockage de l'énergie électrique, appelé par la suite batteries, peut comporter des cellules électrochimiques comprenant tous types de technologies, ou des condensateurs, regroupés en un ou plusieurs modules, et connectés entre eux en série ou en parallèle.

Pour certains de ces véhicules, les batteries peuvent être aussi rechargées sur un réseau de distribution d'électricité, après un raccordement sur ce réseau lors d'un arrêt du véhicule.

On peut ainsi réaliser différents modes de fonctionnement, comportant notamment un mode uniquement avec la motorisation électrique et sans émission de gaz polluants, appelé mode électrique ou mode « ZEV », un mode hybride et un mode sport associant les deux motorisations pour favoriser respectivement la consommation et les performances du véhicule, et un mode avec les quatre roues motrices permettant d'améliorer la sécurité et la tenue de route de ce véhicule.

Un procédé de répartition de la puissance électrique délivrée par la machine électrique avant, présenté notamment par le document FR-A1-2955532, préserve quand le dispositif de stockage comporte un niveau d'énergie suffisamment bas, le courant produit par cette première machine pour alimenter la machine électrique arrière.

Toutefois, dans le cas d'une forte demande en couple qui dépasse la capacité du moteur thermique, il peut y avoir un conflit entre les différents prélèvements de puissance effectués par la machine électrique avant, qui réduisent la puissance restante disponible pour être délivrée aux roues motrices du véhicule.

La présente invention a notamment pour but d'éviter ces inconvénients de la technique antérieure.

Elle propose à cet effet un procédé de limitation du couple prélevé par une première machine électrique couplée à un moteur thermique de traction d'un véhicule hybride, ce véhicule comportant une deuxième machine électrique de traction alimentée par un dispositif de stockage d'énergie électrique, cette première machine prévue pour alimenter en courant le réseau de bord du véhicule, pouvant aussi recharger le dispositif de stockage de l'énergie, le moteur thermique recevant une demande de couple sur les roues qu'il motorise exprimée par une volonté conducteur, caractérisé en ce que la première machine électrique réalisant une recharge du dispositif de stockage d'énergie, dans le cas d'une forte demande en couple de la volonté conducteur dépassant les possibilités du moteur thermique, il limite le couple absorbé par cette première machine en ajustant la puissance électrique délivrée pour cette recharge, afin de répondre à la demande de couple.

Un avantage du procédé de limitation du couple prélevé selon l'invention, est que l'on peut en délestant la puissance destinée à la recharge du dispositif de stockage d'énergie, et donc le couple absorbé par la première machine électrique, préserver un niveau de couple délivré par le moteur thermique sur le train qu'il motorise, qui peut répondre au mieux à la demande du conducteur.

Le procédé de limitation du couple absorbé selon l'invention peut en outre comporter une ou plusieurs des caractéristiques suivantes, qui peuvent être combinées entre elles.

Avantageusement, pendant la limitation du couple absorbé par la première machine électrique, le procédé maintient constant la puissance délivrée par cette machine qui est destinée à alimenter en courant le réseau de bord du véhicule.

Avantageusement, le procédé réalise les opérations suivantes :
- il effectue un calcul de différence qui retire à la volonté conducteur le couple de consigne brut de la machine électrique avant, pour obtenir le couple de consigne brut du moteur thermique qui est délivré à un limiteur de couple ;
- il réalise si nécessaire une limitation donnant le couple moteur thermique réalisable, avec le limiteur de couple recevant d'une fonction de limitation organique, des valeurs de couple maximal délivrable et de couple minimal prélevé par ce moteur thermique, dans les conditions de fonctionnement en cours ;
- il effectue un deuxième calcul de différence qui retire à la volonté conducteur le couple moteur thermique réalisable, afin d'obtenir le couple restant à réaliser par la machine électrique avant pour satisfaire la volonté conducteur ;
- il effectue une opération de comparaison entre le couple restant à réaliser par la machine électrique avant et le couple minimal à réaliser par cette machine électrique, pour prendre la plus petite de ces deux valeurs qui donne le couple final de la machine électrique avant.

Avantageusement, après avoir défini le couple final de la machine électrique avant, le procédé en déduit le couple final résultant sur le train avant qui est égal à la plus petite valeur entre d'une part la volonté conducteur, et d'autre part la somme du couple maximal délivrable par le moteur thermique et du couple final de la machine électrique avant, et il en déduit le couple final de consigne du moteur thermique qui correspond au couple moteur thermique réalisable, donné par le couple final résultant sur le train avant, additionné du couple final de la machine électrique avant.

L'invention a aussi pour objet un véhicule hybride disposant d'une première machine électrique couplée à un moteur thermique de traction d'un véhicule hybride, ce véhicule comportant une deuxième machine électrique de traction alimentée par un dispositif de stockage d'énergie électrique, cette première machine prévue pour alimenter en courant le réseau de bord du véhicule, pouvant aussi recharger le dispositif de stockage de l'énergie, le moteur thermique recevant une demande de couple sur les roues qu'il motorise exprimée par une volonté conducteur, ce véhicule comprenant des moyens mettant en oeuvre un procédé de limitation du couple prélevé par la première machine électrique, qui comporte l'une quelconque des caractéristiques précédentes.

En particulier, le moteur thermique peut entraîner les roues avant, et la deuxième machine électrique entraîner les roues arrière.

L'invention sera mieux comprise et d'autres caractéristiques et avantages apparaîtront plus clairement à la lecture de la description ci-après, donnée à titre d'exemple et de manière non limitative en référence aux dessins annexés dans lesquels :
- la figure 1 est un schéma d'un véhicule hybride mettant en oeuvre le procédé de limitation du couple selon l'invention ;
- la figure 2 est un graphique présentant les principales fonctions de contrôle des motorisations de ce véhicule ;
- la figure 3 est un graphique présentant le principe de fonctionnement du procédé ; et
- la figure 4 présente des courbes en fonction du temps, montrant successivement en partant du haut, les couples relatifs au train avant, les couples relatifs au moteur thermique, et les couples relatifs à la machine électrique avant.

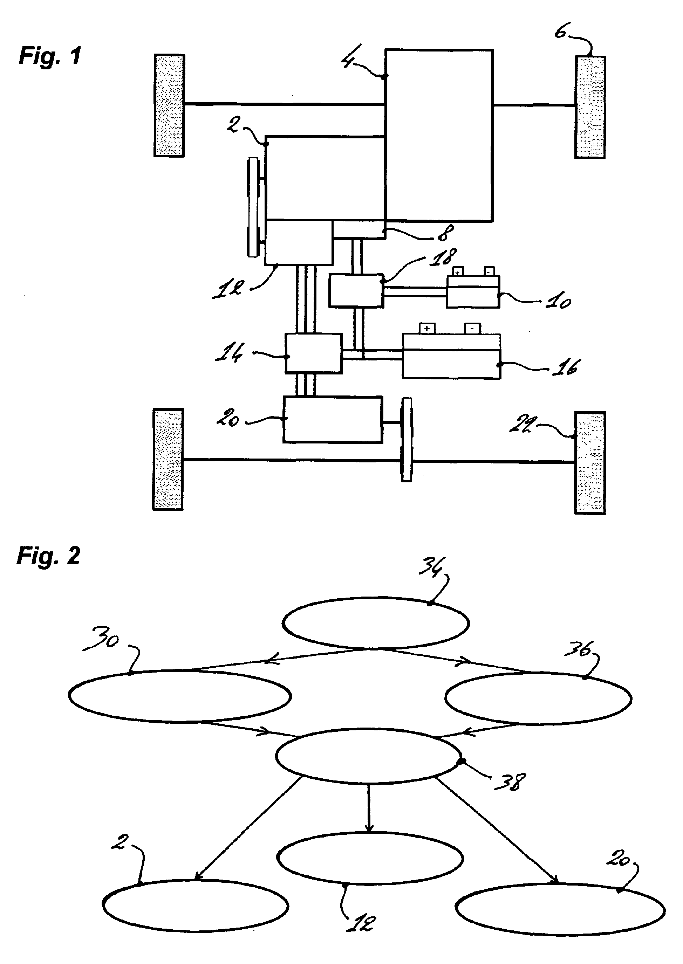

La figure 1 présente un véhicule hybride comportant un moteur thermique 2 entraînant des roues avant 6 par une boîte de vitesses 4 comprenant une commande automatique de passage des vitesses. Le moteur thermique 2 comporte un démarreur électrique 8, alimenté en courant par une batterie basse tension 10.

Une machine électrique avant 12 est couplée par une transmission au moteur thermique 2, afin de l'assister dans son fonctionnement, et une machine électrique arrière 20 est couplée directement aux roues arrière 22 du véhicule. Les deux machines électriques 12, 20 sont reliées à un onduleur 14, qui est lui-même relié à des batteries haute tension 16, permettant de délivrer ou de recevoir une puissance électrique importante.

Un convertisseur de courant DC-DC 18 est interposé entre la batterie basse tension 10 et les batteries haute tension 16, afin de recharger si nécessaire cette batterie basse tension à partir d'une énergie prélevée dans les batteries haute tension ou venant de l'onduleur 14, avec une adaptation de la tension du courant réalisée par le convertisseur.

Le véhicule hybride peut ainsi fonctionner avec différents modes de roulage, comprenant notamment un mode électrique utilisant la machine électrique arrière 20, le moteur thermique 2 étant arrêté et la boîte de vitesses 4 étant au point mort, un mode hybride utilisant toutes les motorisations, un mode quatre roues motrices avec les deux motorisations, appelé aussi mode « E-AWD », permettant d'améliorer la motricité et la tenue de route du véhicule, ainsi qu'un mode sport.

Pour chaque motorisation, le couple maximal est le couple positif maximum qu'il peut délivrer en fournissant une puissance mécanique, et le couple minimal est le couple négatif maximum qu'il peut prélever avec une consommation de puissance mécanique, en travaillant en frein moteur dans le cas du moteur thermique 2, ou comme un générateur électrique dans le cas des machines électriques 12, 20.

La figure 2 présente une fonction d'interface de la volonté du conducteur 34, recevant différentes informations sur le fonctionnement du véhicule, comprenant notamment la demande de couple du conducteur appuyant sur la pédale d'accélérateur, qui transmet des données à une fonction de traduction de volonté conducteur 36, ainsi qu'à une fonction de limitation organique 30 calculant la limite de couple que chaque organe peut délivrer.

Une fonction de répartition de la consigne de couple 38 entre les différentes motorisations, reçoit une demande globale de couple de la fonction de traduction de volonté conducteur 36, ainsi que les limites organiques de chaque motorisation définies par la fonction de limitation organique 30, afin de répartir cette demande sur chaque motorisation,

La fonction de répartition de la consigne de couple 38 répartit la volonté du conducteur 36 entre une consigne de couple sur le train avant et une consigne sur le train arrière, en émettant des consignes de couple pour le moteur thermique 2, pour la machine électrique avant 12 et pour la machine électrique arrière 20.

La machine électrique avant 12 travaille en génératrice en prélevant un couple modéré sur le moteur thermique 2, afin de fournir une petite puissance électrique délivrée généralement en permanence, au convertisseur de courant DC-DC 18 afin de maintenir dans le réseau de bord une tension minimum nécessaire à son fonctionnement.

La machine électrique avant 12 travaille aussi en génératrice en prélevant un couple plus important, afin de fournir une puissance électrique qui peut être élevée, délivrée aux batteries haute tension 16 afin de les recharger pour maintenir un niveau suffisant de charge, permettant à la machine électrique arrière 20 de fournir à tout instant un couple moteur.

Le couple moteur venant de la machine électrique arrière 20, peut répondre notamment à des besoins de performances demandées par le conducteur, ce couple venant s'ajouter à celui délivré par le moteur thermique, à des besoins de motricité avec le mode quatre roues motrice E-AWD, ou à des besoins de sécurité sur demande notamment de systèmes d'aide à la conduite du type ABS ou ESP.

Le couple fourni par le moteur thermique 2 se décompose alors en un couple délivré sur les roues avant 6, et un couple délivré sur la machine électrique avant 12 qui sert d'une part à fournir une petite puissance électrique au convertisseur de courant DC-DC 18, et d'autre part à fournir aux batteries 16 une puissance électrique qui peut être plus importante.

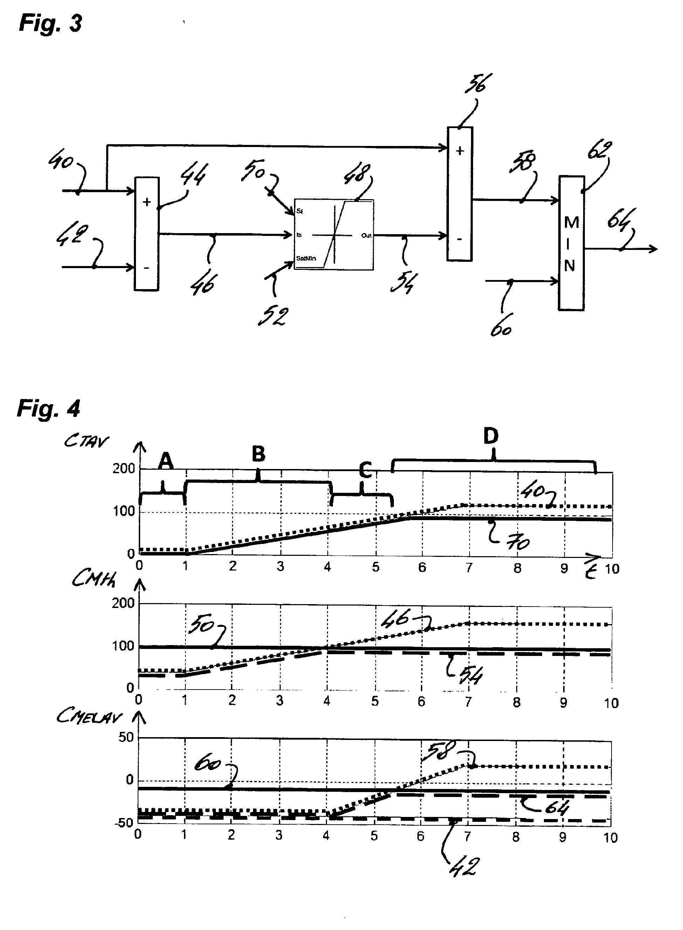

La figure 3 présente le procédé de limitation du couple prélevé par la machine électrique avant 12, qui lorsque le moteur thermique 2 ne peut pas répondre entièrement à la demande d'un fort couple exprimé par la volonté conducteur 36, va délester le couple prélevé pour la régulation du niveau d'énergie dans les batteries 16, afin de délivrer un couple plus important aux roues avant 6 afin de répondre au mieux à la demande du conducteur.

D'abord un calcul de différence 44 retire à la volonté conducteur 40 le couple de consigne brut de la machine électrique avant 42, pour obtenir le couple de consigne brut du moteur thermique 46 qui est délivré à un limiteur de couple 48.

Le limiteur de couple 48 reçoit de la fonction de limitation organique 30, des valeurs de couple maximal 50 délivrable par le moteur thermique et de couple minimal 52 prélevé par ce moteur, dans les conditions de fonctionnement en cours, afin de réaliser si nécessaire une limitation donnant le couple moteur thermique réalisable 54.

Un deuxième calcul de différence 56 retire à la volonté conducteur 40 le couple moteur thermique réalisable 54, afin d'obtenir le couple restant à réaliser par la machine électrique avant 58 pour satisfaire la volonté conducteur 36.

Une opération de comparaison 62 est effectuée entre le couple restant à réaliser par la machine électrique avant 58, et le couple minimal à réaliser par cette machine électrique 60, pour prendre la plus petite de ces deux valeurs qui donne le couple final de la machine électrique avant 64.

Après avoir défini ce couple final de la machine électrique avant 64, on peut en déduire le couple final de consigne du moteur thermique qui correspond au couple moteur thermique réalisable 54, et le couple final résultant sur le train avant qui est égal à la plus petite valeur entre d'une part la volonté conducteur 40, et d'autre part la somme du couple maximal délivrable par le moteur thermique 50, et du couple final de la machine électrique avant 64.

Le couple final de consigne du moteur thermique 54, est alors égal au couple final résultant sur le train avant, additionné du couple final de la machine électrique avant 64.

La figure 4 présente en fonction du temps t, une première phase de vie A comportant une demande du conducteur qui est nulle. La volonté conducteur 40 est à zéro ainsi que le couple final résultant sur le train avant 70. Le moteur thermique reçoit un couple final de consigne 54 modéré qui équilibre la demande de couple final négatif de la machine électrique avant 64, permettant de fournir une puissance électrique faible au convertisseur de courant DC-DC 18 afin d'alimenter le réseau de bord, et une puissance électrique importante pour recharger les batteries 16.

La deuxième phase de vie B comporte une volonté conducteur 40 qui augmente progressivement. La demande de couple final de la machine électrique avant 64 est toujours aussi importante pour répondre aux deux besoins de puissance, le couple final de consigne du moteur thermique 54 augmente progressivement pour répondre à la volonté conducteur 40, jusqu'à la fin de cette deuxième phase de vie B où le couple maximal délivrable par le moteur thermique 50 est atteint.

La troisième phase de vie C comporte une volonté conducteur 40 qui continue à augmenter progressivement, alors que le moteur thermique n'est plus capable de satisfaire cette demande.

Le procédé de limitation du couple réalise alors un délestage du couple prélevé par la machine électrique avant 12, la demande de couple final négatif de cette machine 64 diminue progressivement pour se rapprocher de zéro, en réduisant la puissance électrique importante destinée à recharger les batteries 16, tout en maintenant la puissance électrique faible destinée au convertisseur de courant DC-DC 18. On notera que pendant cette phase, la volonté conducteur 40 est toujours respectée, le couple final résultant sur le train avant 70 restant équivalent à cette volonté conducteur.

La quatrième phase de vie D commence quand la volonté conducteur 40 ne peut plus être respectée, le délestage du couple prélevé par la machine électrique avant 12 n'étant plus suffisant pour continuer à augmenter le couple final résultant sur le train avant 70.

D'une manière générale, le procédé de limitation du couple selon l'invention permet d'optimiser la consommation de carburant, tout en maintenant dans la mesure du possible un potentiel de performance et de sécurité grâce au couple sur le train arrière qui peut être apporté.

## Revendications

1. Procédé de limitation du couple prélevé par une première machine électrique (12) couplée à un moteur thermique de traction (2) d'un véhicule hybride, ce véhicule comportant une deuxième machine électrique de traction (20) alimentée par un dispositif de stockage d'énergie électrique (16), cette première machine prévue pour alimenter en courant le réseau de bord du véhicule (18), pouvant aussi recharger le dispositif de stockage de l'énergie (16), le moteur thermique (2) recevant une demande de couple sur les roues qu'il motorise (6) exprimée par une volonté conducteur (40), **caractérisé en ce que** la première machine électrique (12) réalisant une recharge du dispositif de stockage d'énergie (16), dans le cas d'une forte demande en couple de la volonté conducteur (40) dépassant les possibilités du moteur thermique (2), il limite le couple absorbé par cette première machine en ajustant la puissance électrique délivrée pour cette recharge, afin de répondre à la demande de couple.

2. Procédé de limitation de couple selon la revendication 1, **caractérisé en ce que** pendant la limitation du couple absorbé par la première machine électrique (12), il maintient constant la puissance délivrée par cette machine qui est destinée à alimenter en courant le réseau de bord du véhicule (18).

3. Procédé de limitation de couple selon la revendication 1 ou 2, **caractérisé en ce qu'**il réalise les opérations suivantes :
- il effectue un calcul de différence (44) qui retire à la volonté conducteur (40) le couple de consigne brut de la machine électrique avant (42), pour obtenir le couple de consigne brut du moteur thermique (46) qui est délivré à un limiteur de couple (48) ;
- il réalise si nécessaire une limitation donnant le couple moteur thermique réalisable (54), avec le limiteur de couple (48) recevant d'une fonction de limitation organique (30), des valeurs de couple maximal (50) délivrable par le moteur thermique et de couple minimal (52) prélevé par ce moteur, dans les conditions de fonctionnement en cours ;
- il effectue un deuxième calcul de différence (56) qui retire à la volonté conducteur (40) le couple moteur thermique réalisable (54), afin d'obtenir le couple restant à réaliser par la machine électrique avant (58) pour satisfaire la volonté conducteur (36) ;
- il effectue une opération de comparaison (62) entre le couple restant à réaliser par la machine électrique avant (58), et le couple minimal à réaliser par cette machine électrique (60), pour prendre la plus petite de ces deux valeurs qui donne le couple final de la machine électrique avant (64).

4. Procédé de limitation de couple selon la revendication 3, **caractérisé en ce qu'**après avoir défini le couple final de la machine électrique avant (64), il en déduit le couple final résultant sur le train avant qui est égal à la plus petite valeur entre d'une part la volonté conducteur (40), et d'autre part la somme du couple maximal délivrable par le moteur thermique (50) et du couple final de la machine électrique avant (64), et il en déduit le couple final de consigne du moteur thermique qui correspond au couple moteur thermique réalisable (54), donné par le couple final résultant sur le train avant, additionné du couple final de la machine électrique avant (64).

5. Véhicule hybride disposant d'une première machine électrique (12) couplée à un moteur thermique de traction (2) d'un véhicule hybride, ce véhicule comportant une deuxième machine électrique de traction (20) alimentée par un dispositif de stockage d'énergie électrique (16), cette première machine prévue pour alimenter en courant le réseau de bord du véhicule (18), pouvant aussi recharger le dispositif de stockage de l'énergie (16), le moteur thermique (2) recevant une demande de couple sur les roues qu'il motorise (6) exprimée par une volonté conducteur (40), **caractérisé en ce qu'**il comporte des moyens mettant en oeuvre un procédé de limitation du couple prélevé par la première machine électrique (12), qui est réalisé selon l'une quelconque des revendications précédentes.

6. Véhicule hybride selon la revendication 5, **caractérisé en ce que** le moteur thermique (2) entraîne les roues avant (6), et la deuxième machine électrique (20) entraîne les roues arrière (22).

## Patentansprüche

1. Begrenzungsverfahren des Drehmoments, das von einem ersten elektrischen Motor (12), der mit einer Antriebsbrennkraftmaschine (2) eines Hybridfahrzeugs gekoppelt ist, entnommen wird, wobei dieses Fahrzeug einen zweiten elektrischen Antriebsmotor (20), der von einer Stromspeichervorrichtung (16) versorgt wird, umfasst, wobei dieser erste Motor, der vorgesehen ist, um das Bordnetzwerk des Fahrzeugs (18) mit Strom zu versorgen, auch die Stromspeichervorrichtung (16) aufladen kann, wobei die Brennkraftmaschine (2) eine Drehmomentanfrage auf den Rädern, die sie antreibt (6), ausgedrückt durch eine Forderung des Fahrers (40) empfängt, **dadurch gekennzeichnet, dass** der erste elektrische Motor (12) ein Aufladen der Stromspeichervorrichtung (16) in dem Fall einer starken Drehmomentnachfrage der Forderung des Fahrers (40), die die Möglichkeiten der Brennkraftmaschine (2) überschreitet, das von diesem ersten Motor aufgenommene Drehmoment begrenzt, indem er die elektrische Leistung einstellt, die für dieses Aufladen geliefert wird, um die Drehmomentnachfrage zu erfüllen.

2. Begrenzungsverfahren des Drehmoments nach Anspruch 1, **dadurch gekennzeichnet, dass** es, während der Begrenzung des Drehmoments, das von dem ersten elektrischen Motor (12) aufgenommen wird, die von diesem Motor gelieferte Leistung, die dazu bestimmt ist, das Bordnetzwerk des Fahrzeugs (18) zu versorgen, konstant hält.

3. Begrenzungsverfahren des Drehmoments nach Anspruch 1 oder 2, **dadurch gekennzeichnet, dass** es die folgenden Vorgänge ausführt:
- Berechnen des Unterschieds (44), der von der Forderung des Fahrers (40) das Bruttosolldrehmoment des vorderen elektrischen Motors (42) abzieht, um das Bruttosolldrehmoment der Brennkraftmaschine (46), das zu einem Drehmomentbegrenzer (48) geliefert wird, zu erhalten,
- falls erforderlich, Ausführen einer Begrenzung, die das erzeugbare Brennkraftmaschinendrehmoment (54) gibt, wobei der Drehmomentbegrenzer (48) eine organische Begrenzungsfunktion (30) der maximalen Drehmomentwerte (50), die die Brennkraftmaschine liefern kann, und des Mindestdrehmoments (52), das von dieser Maschine bei den aktuellen Betriebszuständen entnommen wird, empfängt,
- Ausführen einer zweiten Berechnung des Unterschieds (56), die das erzeugbare Brennkraftmaschinendrehmoment (54) von der Forderung des Fahrers (40) abzieht, um das Restdrehmoment, das von dem vorderen elektrischen Motor (58) zu erzeugen ist, um die Forderung des Fahrers (36) zu erfüllen, zu erhalten,
- Ausführen eines Vergleichsvorgangs (62) zwischen dem Restdrehmoment, das von dem vorderen elektrischen Motor (58) zu erzeugen ist, und dem Mindestdrehmoment, das von diesem elektrischen Motor (60) zu erzeugen ist, um den kleineren dieser zwei Werte zu nehmen, der das abschließende Drehmoment des vorderen elektrischen Motors (64) gibt.

4. Begrenzungsverfahren des Drehmoments nach Anspruch 3, **dadurch gekennzeichnet, dass** es nach dem Definieren des abschließenden Drehmoments des vorderen elektrischen Motors (64) davon das abschließende Drehmoment ableitet, das auf der Vorderachse resultiert, das gleich dem kleinsten Wert zwischen einerseits der Forderung des Fahrers (40) und andererseits der Summe des von der Brennkraftmaschine maximalen lieferbaren Drehmoments (50) und des abschließenden Drehmoments des vorderen elektrischen Motors (64) ist, und davon das abschließende Solldrehmoment der Brennkraftmaschine ableitet, das dem erzeugbaren Brennkraftmaschinendrehmoment (54) entspricht, das von dem abschließenden Drehmoment gegeben wird, das auf der Vorderachse resultiert, zuzüglich des abschließenden Drehmoments des vorderen elektrischen Motors (64).

5. Hybridfahrzeug, das über einen ersten elektrischen Motor (12) verfügt, der mit einer Antriebsbrennkraftmaschine (2) eines Hybridfahrzeugs gekoppelt ist, wobei dieses Fahrzeug einen zweiten elektrischen Antriebsmotor (20) umfasst, der von einer Stromspeichervorrichtung (16) versorgt wird, wobei dieser erste Motor, der vorgesehen ist, um das Bordnetzwerk des Fahrzeugs (18) zu vorsorgen, auch die Energiespeichervorrichtung (16) aufladen kann, wobei die Brennkraftmaschine (2) eine Drehmomentanfrage auf den Rädern, die sie antreibt (6), ausgedrückt durch eine Forderung des Fahrers (40) empfängt, **dadurch gekennzeichnet, dass** es Mittel umfasst, die ein Begrenzungsverfahren des Drehmoments, das von dem ersten elektrischen Motor (12) entnommen wird, nach einem der vorhergehenden Ansprüche umsetzt.

6. Hybridfahrzeug nach Anspruch 5, **dadurch gekennzeichnet, dass** die Brennkraftmaschine (2) die Vorderräder (6) antreibt, und dass der zweite elektrische Motor (20) die Hinterräder (22) antreibt.

## Claims

1. A method for limiting the torque drawn by a first electric machine (12) coupled to a traction combustion engine (2) of a hybrid vehicle, said vehicle comprising a second traction electric machine (20) powered by an electrical energy storage device (16), said first machine, designed to supply current to the onboard network (18) of the vehicle, also being able to charge the energy storage device (16), the combustion engine (2) receiving a torque request on the wheels which it drives (6) expressed by the driver (40), **characterized in that** the first electric machine (12), carrying out a charge of the energy storage device (16), in the case of a high torque request made by the driver (40) exceeding the capabilities of the combustion engine (2), it limits the torque absorbed by this first machine by adjusting the electrical power delivered for said charging, in order to meet the torque request.

2. The method for limiting torque according to Claim 1, **characterized in that** during the limitation of the torque absorbed by the first electric machine (12), it keeps constant the power delivered by this machine which is intended to supply the onboard network (18) of the vehicle with current.

3. The method for limiting torque according to Claim 1 or 2, **characterized in that** it carries out the following operations:
- it carries out a difference calculation (44), which takes at the driver's intention (40) the gross setpoint torque of the front electric machine (42), to obtain the gross setpoint torque of the combustion engine (46) which is delivered to a torque limiter (48);
- it carries out, if necessary, a limitation giving the realizable combustion engine torque (54), with the torque limiter (48) receiving from an organic limitation function (30) maximum torque values (50) able to be delivered by the combustion engine and minimum torque values (52) drawn by this engine, under the current operating conditions;
- it carries out a second difference calculation (56), which takes at the driver's intention (40) the realizable combustion engine torque (54), so as to obtain the torque remaining to be realized by the front electric machine (58) to meet the driver's intention (36);
- it carries out a comparison operation (62) between the torque remaining to be realized by the front electric machine (58), and the minimum torque to be realized by this electric machine (60), to take the smallest of these two values, which gives the final torque of the front electric machine (64).

4. The torque limitation method according to Claim 3, **characterized in that** after having defined the final torque of the front electric machine (64), it makes a deduction therefrom of the resulting final torque on the front axle which is equal to the smallest value between on the one hand the driver's intention (40), and on the other hand the sum of the maximum torque able to be delivered by the combustion engine (50) and of the final torque of the front electric machine (64), and it makes a deduction therefrom of the final setpoint torque of the combustion engine which corresponds to the realizable combustion engine torque (54), given by the resulting final torque on the front axle, supplemented with the final torque of the front electric machine (64).

5. A hybrid vehicle having a first electric machine (12) coupled to a traction combustion engine (2) of a hybrid vehicle, said vehicle comprising a second traction electric machine (20) powered by an electrical energy storage device (16), said first machine, designed to supply current to the onboard network (18) of the vehicle, also being able to charge the energy storage device (16), the combustion engine (2) receiving a torque request on the wheels (6) which it drives, expressed by the driver (40), **characterized in that** it comprises means implementing a method of limitation of the torque drawn by the first electric machine (12), which is realized according to any one of the preceding claims.

6. The hybrid vehicle according to Claim 5, **characterized in that** the combustion engine (2) drives the front wheels (6), and the second electric machine (20) drives the rear wheels (22).
